# EUROPÄISCHE PATENTSCHRIFT

(11) **EP 3 634 830 B1**
(45) Veröffentlichungstag und Bekanntmachung des Hinweises auf die Patenterteilung: **22.02.2023**
(21) Anmeldenummer: 18739800.3
(22) Anmeldetag: 03.07.2018
(51) Int. Cl.: B61L 23/00, B61L 23/04, B61C 17/04, B61D 25/00, B60J 3/04

(54) **VERFAHREN UND VORRICHTUNG ZUM SCHUTZ EINES FAHRZEUGFÜHRERS**
METHOD AND DEVICE FOR PROTECTING A VEHICLE OPERATOR
PROCÉDÉ ET DISPOSITIF POUR PROTÉGER LE CONDUCTEUR D'UN VÉHICULE

(30) Priorität: 01.08.2017 DE 102017213261
(43) Veröffentlichungstag der Anmeldung: 15.04.2020
(73) Patentinhaber: Siemens Mobility GmbH, 81739 München (DE)
(72) Erfinder: GERKEN, Frank, 38531 Rötgesbüttel (DE); FREITAG, Andreas, 38446 Wolfsburg (DE)
(86) Internationale Anmeldenummer: PCT/EP2018/067905
(87) Internationale Veröffentlichungsnummer: WO 2019/025105

(56) Entgegenhaltungen:
- WO-A1-2005/100110
- WO-A1-2017/071911
- DE-A1-102009 008 077
- DE-A1-102011 010 947
- DE-A1-102015 219 690
- FISCHER J W: "NEUE, SCHNELLE, KOMOFORTABLE ZUEGE MIT NEIGETECHNIK FUER DIE DEUTSCHE BAHN AG", ZEITSCHRIFT FUR EISENBAHNWESEN UND VERKEHRSTECHNIK. DIE EISENBAHNTECHNIK + GLASERS ANNALEN, GEORG SIEMENS VERLAGSBUCHHANDLUNG. BERLIN, DE, Bd. 122, Nr. 9/10, 1. September 1998 (1998-09-01), Seiten 416,418-430, XP000781624, ISSN: 0941-0589

## Beschreibung

Die Erfindung betrifft ein Verfahren und eine Vorrichtung zum Schutz eines Fahrzeugführers eines auf einer Fahrstrecke fahrenden Schienenfahrzeugs.

Aus der DE 10 2015 219 690 A1 ist ein Verfahren zur Fahrwegserkennung für ein Schienenfahrzeug und aus der WO 2017/071911 A1 ist ein Fahrzeug bekannt, das menschliche Reaktionen minimiert.

Leider kommt es vor, dass Menschen sich selber umbringen wollen, indem sie sich vor einen fahrenden Zug werfen. Selbst bei einem frühzeitigen Erkennen hat der Fahrzeugführer des Zugs, aufgrund eines sehr langen Bremswegs und fehlender Ausweichmöglichkeiten bei Schienenfahrzeugen, kaum eine Möglichkeit, den drohenden Unfall zu verhindern. Durch die Position des Fahrzeugführers an der Front des Zugs sieht dieser den Aufprall der Person auf dem Schienenfahrzeug und dessen Folgen unmittelbar. Dieses traumatische Erlebnis stellt für viele Fahrzeugführer, insbesondere durch die Bilder des Unfalls, eine sehr starke psychologische Belastung dar. Diese psychologische Belastung kann langfristige Folgen für den Fahrzeugführer, wie beispielsweise jahrelange Beeinträchtigungen oder Berufsunfähigkeit, zur Folge haben. Schienennetzbetreiber haben durch den Ausfall der traumatisierten Fahrzeugführer erhebliche Probleme und hohe Aufwendungen für die Wiedereingliederung betroffener Mitarbeiter.

Es ist daher die Aufgabe der vorliegenden Erfindung, ein Verfahren und eine Vorrichtung der eingangs genannten Art bereitzustellen, um diesem Problem zu begegnen.

Die Erfindung löst die Aufgabe durch ein Verfahren zum Schutz eines Fahrzeugführers eines auf einer Fahrstrecke fahrenden Schienenfahrzeugs, bei dem wenigstens ein sich vor dem Schienenfahrzeug auf der Fahrstrecke befindliches Lebewesen von einer Sensoreinrichtung erkannt wird und bei dem die Sicht des Fahrzeugführers in Richtung des erkannten Lebewesens mit einer Blockadeeinrichtung blockiert wird.

Weiterhin löst die Erfindung die Aufgabe durch eine Vorrichtung zum Schutz eines Fahrzeugführers eines auf einer Fahrstrecke fahrenden Schienenfahrzeugs mit wenigstens einer Blockadeeinrichtung, die zum Blockieren der Sicht des Fahrzeugführers in Richtung wenigstens eines erkannten und sich auf der Fahrstrecke vor dem Schienenfahrzeug befindlichen Lebewesens ausgebildet ist. Die erfindungsgemäße Vorrichtung kann beispielsweise als Frontscheibe eines Schienenfahrzeugs ausgebildet sein.

Die erfindungsgemäße Lösung hat den Vorteil, dass der Triebfahrzeugführer den Aufprall der Person auf die Front des Schienenfahrzeugs zumindest optisch nicht miterlebt und das traumatisierende Erlebnis dadurch abgeschwächt oder sogar verhindert wird. Da visuelle Erlebnisse einen starken Einfluss auf die menschliche Psyche haben, kann die blockierte Sicht des Fahrzeugführers ein Trauma verhindern und dadurch positiven Einfluss haben.

Dabei kann das Lebewesen, dem die Kollision mit dem Schienenfahrzeug droht, durch eine erfindungsgemäße Sensoreinrichtung erkannt werden. Diese Erkenntnis über das erkannte Lebewesen wird erfindungsgemäß gekoppelt mit der Blockadeeinrichtung, die die Sicht des Fahrzeugführers in Richtung des erkannten Lebewesens blockiert.

Der Fahrzeugführer kann auch selbst die drohende Kollision erkennen und die Blockadeeinrichtung aktivieren. Erfindungsgemäß wird die psychologische Beeinträchtigung des Fahrzeugführers durch das Verhindern der visuellen Wahrnehmung des Unfalls gemindert. Der Fahrzeugführer kann durch die Erfindung den unmittelbaren Aufprall der Person auf das Schienenfahrzeug und dessen Folgen nicht mehr sehen.

Die erfindungsgemäße Lösung kann durch vorteilhafte Ausgestaltungen weiterentwickelt werden, wie sie im Folgenden beschrieben sind.

So kann in einer vorteilhaften Ausgestaltung des erfindungsgemäßen Verfahrens ein Abstand zwischen dem erkannten Lebewesen und dem Schienenfahrzeug durch die Sensoreinrichtung ermittelt werden und die Sicht durch die Blockadeeinrichtung blockiert werden, wenn der Abstand einen vorbestimmten Grenzwert unterschreitet. Dies hat den Vorteil, dass die Sicht des Fahrzeugführers erst blockiert wird, wenn der Abstand zum Lebewesen so klein ist, dass ein Aufprall unvermeidlich ist.

Ferner wird erfindungsgemäß von der Sensoreinrichtung ermittelt, ob es sich bei dem Lebewesen um einen Menschen oder ein Tier handelt, und die Sicht wird erfindungsgemäß durch die Blockadeeinrichtung nur blockiert, wenn es sich bei dem Lebewesen um einen Menschen handelt. Dies hat den Vorteil, dass die Sicht nicht blockiert wird, wenn es sich beispielsweise um ein kleineres Tier handelt, bei dem der Fahrzeugführer ggf. entsprechend seinen Vorschriften weiterfahren kann oder muss.

Um eine zu schnelle Sichtblockierung zu verhindern, kann eine Wahrscheinlichkeit eines Aufpralls des Lebewesens mit dem Schienenfahrzeug durch eine Recheneinrichtung (9) ermittelt werden und die Sicht durch die Blockadeeinrichtung blockiert werden, wenn die Wahrscheinlichkeit einen vorbestimmten Grenzwert überschreitet. So wird die Sicht auf die Fahrstrecke nur versperrt, wenn der Unfall unvermeidlich erscheint. In einer vorteilhaften Ausgestaltung kann zum Blockieren der Sicht eine Frontscheibe des Schienenfahrzeugs zumindest teilweise undurchsichtig gemacht werden. Dies hat den Vorteil, dass die Sichtblockierung auf technisch einfache und zuverlässige Weise hergestellt werden kann. Beispielsweise kann die Frontscheibe aus einem Flüssigkristallglas hergestellt sein, das auch unter den Namen monochromes oder intelligentes Glas (Smart Glass) bekannt ist. Hierbei verdunkelt sich das Glas durch Anlegen einer vorbestimmten elektrischen Spannung, ist also beispielsweise über die Fahrzeugsteuerung leicht schaltbar. Alternativ kann die Frontscheibe auch durch andere Hilfsmittel, wie beispielsweise Vorhänge, Rollos, Jalousien oder ähnliches, verdunkelt werden.

Die erfindungsgemäße Vorrichtung weist wenigstens eine Sensoreinrichtung auf, die zum Erkennen wenigstens eines sich vor dem Schienenfahrzeug auf der Fahrstrecke befindlichen Lebewesens ausgebildet ist. So wird die Gefahr automatisch erkannt und die Blockadeeinrichtung automatisch aktiviert. Alternativ wäre die manuelle Aktivierung möglich.

Ferner kann die Sensoreinrichtung wenigstens einen Sensor, insbesondere eine Kamera, einen Infrarotsensor oder einen Ultraschallsensor, umfassen. Diese Sensoren sind jeweils besonders gut geeignet, um eine Person auf der Fahrstrecke zuverlässig zu erkennen. Zusätzlich oder alternativ können auch Radar- oder Lidarsensoren eingesetzt werden.

In einer weiteren vorteilhaften Ausgestaltung kann die Blockadeeinrichtung wenigstens ein Flüssigkristallglas umfassen. Dies hat den oben bereits beschriebenen Vorteil, dass Flüssigkristallglas einfach und zuverlässig aktiviert und dadurch verdunkelt werden kann und die Frontscheibe des Schienenfahrzeugs zumindest teilweise daraus hergestellt werden kann. Insbesondere kann die Blockadeeinrichtung aus Flüssigkristallglas als Frontscheibe eines Schienenfahrzeugs ausgebildet sein. Alternativ kann die Blockadeeinrichtung wenigstens eine aktivierbare und die Sicht blockierende Brille für den Fahrzeugführer, einen Vorhang oder ein Rollo umfassen. Dies sind ebenfalls Vorrichtungen, mit denen die Sicht des Fahrzeugführers zuverlässig blockiert werden kann.

Ferner kann die Sensoreinrichtung wenigstens eine Recheneinrichtung umfassen, die zum Ermitteln einer Wahrscheinlichkeit eines Aufpralls des Lebewesens mit dem Schienenfahrzeug ausgebildet ist, und die Blockadeeinrichtung zum Blockieren der Sicht ausgebildet sein, wenn die Wahrscheinlichkeit einen vorbestimmten Grenzwert übersteigt. Dies hat den oben bereits beschriebenen Vorteil, dass eine vorschnelle Sichtblockade verhindert wird, wenn beispielsweise ein Aufprall noch unwahrscheinlich ist und noch verhindert werden kann.

Weiterhin kann die Sensoreinrichtung oder deren Recheneinrichtung zum Ermitteln eines Abstands zwischen dem erkannten Lebewesen und dem Schienenfahrzeug ausgebildet sein und die Blockadeeinrichtung zum Blockieren der Sicht ausgebildet sein, wenn der Abstand einen vorbestimmten Grenzwert unterschreitet. Dies hat den ebenfalls den oben bereits beschriebenen Vorteil, dass auch auf diese Weise die Sicht des Fahrzeugführers nur blockiert wird, wenn ein Aufprall unvermeidlich ist.

Die Sensoreinrichtung ist erfindungsgemäß ausgebildet, zu ermitteln, ob es sich bei dem Lebewesen um einen Menschen oder ein Tier handelt, und die Blockadeeinrichtung ist zum Blockieren der Sicht ausgebildet, wenn das Lebewesen ein Mensch ist. Dies hat den oben bereits beschriebenen Vorteil, dass zwischen Mensch und Tier unterschieden werden kann.

In einer vorteilhaften Weiterbildung kann die Vorrichtung zur Durchführung eines Verfahrens nach einer der oben beschriebenen Ausführungsformen ausgebildet sein.

Schließlich betrifft die Erfindung auch noch ein Schienenfahrzeug, das eine Vorrichtung zum Schutz eines Fahrzeugführers nach einer der oben genannten Ausführungsformen aufweist.

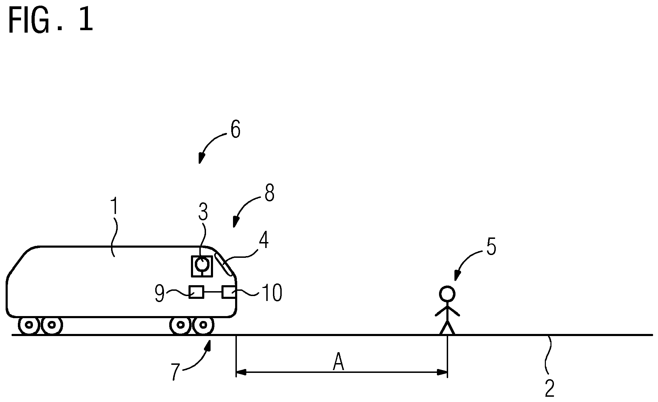

Die erfindungsgemäße Lösung wird im Folgenden mit Bezug auf die beigefügte Figur beschrieben.

Die einzige Figur zeigt eine schematische Darstellung einer beispielhaften Ausführungsform eines erfindungsgemäßen Schienenfahrzeugs mit einer Vorrichtung zum Schutz eines Fahrzeugführers.

Die Figur zeigt eine beispielhafte Ausführungsform eines Schienenfahrzeugs 1, das auf einer Fahrstrecke 2 fährt und von einem Fahrzeugführer 3 bedient wird. Der Fahrzeugführer 3 befindet sich in einem Führerstand hinter einer erfindungsgemäßen Frontscheibe 4 des Schienenfahrzeugs 1. Auf der Fahrstrecke 2 vor dem Schienenfahrzeug 1 befindet sich in einem Abstand A eine Person 5.

Das erfindungsgemäße Schienenfahrzeug 1 weist ferner eine Vorrichtung 6 zum Schutz des Fahrzeugführers 3 auf, die in dieser Ausführung eine Sensoreinrichtung 7 und eine Blockadeeinrichtung 8 umfasst.

Die Sensoreinrichtung 7 ist zum Erkennen eines Lebewesens, wie beispielsweise der Person 5, ausgebildet, die sich auf der Fahrstrecke 2 vor dem Schienenfahrzeug 1 befindet. Die Sensoreinrichtung 7 umfasst einen Sensor 10, beispielsweise eine Kamera, einen Infrarotsensor oder einen Ultraschallsensor, mit dem die Person 5 auf der Fahrstrecke 2 detektiert wird. Die Sensoreinrichtung 7 weist weiterhin eine Recheneinrichtung 9 auf, mit der unter anderem der Abstand A ermittelt werden kann. Hierfür wertet die Recheneinrichtung 9 die Signale des Sensors 10 aus. Zusätzlich oder alternativ ermittelt die Recheneinrichtung 9 aus den Signalen des Sensors 10 eine Wahrscheinlichkeit für einen Zusammenstoß der Person 5 mit dem Schienenfahrzeug 1.

Die Blockadeeinrichtung 8 ist zum Blockieren der Sicht des Fahrzeugführers 3 in Richtung der Person 5 ausgebildet. Hierfür umfasst die Blockadeeinrichtung 8 in der in der Figur dargestellten beispielhaften Ausführungsform die Frontscheibe 4, die aus Flüssigkristallglas hergestellt ist. Flüssigkristallglas, das auch als monochromes oder intelligentes Glas oder Smart Glass bezeichnet wird, kann durch Anlegen einer elektrischen Spannung aktiviert und dadurch verdunkelt werden. Durch die Verdunkelung der Frontscheibe 4 ist die Sicht des Fahrzeugführers 3 auf die Fahrstrecke 2 und die Person 5 blockiert, so dass der Fahrzeugführer einen Aufprall der Person 5 auf dem Schienenfahrzeug 1 nicht sehen kann. Alternativ kann die Blockadeeinrichtung 8 anstatt des Flüssigkristallglases beispielsweise auch einen Vorhang, ein Rollos oder ähnliches für die Frontscheibe 4 aufweisen, die bei Aktivierung die Sicht des Fahrzeugführers 3 durch die Frontscheibe 4 blockiert. Ferner kann die Blockadeeinrichtung 8 alternativ auch eine intelligente Brille (nicht dargestellt) für den Fahrzeugführer 3 umfassen, deren Gläser sich bei Aktivierung verdunkeln und die Sicht des Fahrzeugführers 3 blockieren. Durch die Blockadeeinrichtung 8 kann die Sicht des Fahrzeugführers 3 aus dem Führerstand auf die Fahrstrecke 2 zuverlässig verhindert werden.

Erfindungsgemäß ist die Sensoreinrichtung 7 steuerungstechnisch so mit der Blockadeeinrichtung 8 verbunden, dass wenn die Sensoreinrichtung 7 ein Lebewesen, wie die Person 5, auf der Fahrstrecke 2 erkannt hat, die Blockadeeinrichtung 8 aktiviert und die Sicht des Fahrzeugführers 3 blockiert wird. Hierfür können sowohl die Sensoreinrichtung 7 als auch die Blockadeeinrichtung 8 mit einer Fahrzeugsteuerung (nicht dargestellt) verbunden sein. Erfindungsgemäß wird die Blockadeeinrichtung 8 erst aktiviert, wenn ein Aufprall der Person 5 mit dem Schienenfahrzeug 1 unvermeidbar erscheint. Auf eine Unvermeidbarkeit des Aufpralls wird dadurch geschlossen, dass beispielsweise der Abstand A der Person 5 zum Schienenfahrzeug 1 einen vorbestimmten Grenzwert unterschreitet. Dieser Grenzwert kann beispielsweise vom aktuellen Bremsweg des Schienenfahrzeugs 1 abhängen. Alternativ oder zusätzlich kann der Aufprall auch dadurch unvermeidbar erscheinen, dass eine ausgerechnete Wahrscheinlichkeit für den Aufprall einen vorbestimmten Grenzwert überschreitet. Der Abstand A und der Bremsweg können in die Berechnung der Wahrscheinlichkeit mit einfließen. Weitere Parameter können beispielsweise die Geschwindigkeit des Schienenfahrzeugs 1 und die Masse des Zugs sein. Die Blockadeeinrichtung 8 kann auch erst nach dem Aktivieren der Bremse, insbesondere einer Vollbremsung, aktiviert werden.

Die Vorschriften von bestimmten Betreibern von Schienenfahrzeugen 1 können vorschreiben, dass für bestimmte Tiere nicht gebremst und die Fahrt des Schienenfahrzeugs 1 fortgesetzt werden soll. Damit zuverlässig zwischen einem Tier und einer Person 5 unterschieden werden kann, kann die Sensoreinrichtung 7 ermitteln, ob es sich bei einem erkannten Lebewesen um einen Menschen oder ein Tier handelt. Dies kann beispielsweise durch eine Auswertung der Signale des Sensors 10 mit abgespeicherten Vergleichsmustern geschehen.

Alternativ zu der in der Figur beispielhaft dargestellten Ausführungsform kann die Vorrichtung 6 auch nur die Blockadeeinrichtung 8 aufweisen. In dieser Ausführung könnte die Blockadeeinrichtung 8 beispielsweise manuell vom Fahrzeugführer 3 aktiviert werden.

## Patentansprüche

1. Verfahren zum Schutz eines Fahrzeugführers (3) eines auf einer Fahrstrecke (2) fahrenden Schienenfahrzeugs (1), bei dem wenigstens ein sich vor dem Schienenfahrzeug (1) auf der Fahrstrecke (2) befindliches Lebewesen (5) von einer Sensoreinrichtung (7) erkannt wird,
**dadurch gekennzeichnet, dass**
die Sicht des Fahrzeugführers (3) in Richtung des erkannten Lebewesens mit einer Blockadeeinrichtung (8) blockiert wird, von der Sensoreinrichtung (7) ermittelt wird, ob es sich bei dem Lebewesen (5) um einen Menschen oder ein Tier handelt, und
die Sicht durch die Blockadeeinrichtung (8) nur blockiert wird, wenn es sich bei dem Lebewesen um einen Menschen handelt.

2. Verfahren nach Anspruch 1,
**dadurch gekennzeichnet, dass**
ein Abstand zwischen dem erkannten Lebewesen (5) und dem Schienenfahrzeug (1) durch die Sensoreinrichtung (7) ermittelt wird und
die Sicht durch die Blockadeeinrichtung (8) blockiert wird, wenn der Abstand einen vorbestimmten Grenzwert unterschreitet.

3. Verfahren nach Anspruch 1 oder 2,
**dadurch gekennzeichnet, dass**
eine Wahrscheinlichkeit eines Aufpralls des Lebewesens (5) mit dem Schienenfahrzeug (1) durch eine Recheneinrichtung (9) ermittelt wird und
die Sicht durch die Blockadeeinrichtung (8) blockiert wird, wenn die Wahrscheinlichkeit einen vorbestimmten Grenzwert überschreitet.

4. Verfahren nach einem der oben genannten Ansprüche,
**dadurch gekennzeichnet, dass**
zum Blockieren der Sicht eine Frontscheibe (4) des Schienenfahrzeugs (1) zumindest teilweise undurchsichtig gemacht wird.

5. Verfahren nach Anspruch 4,
**dadurch gekennzeichnet, dass**
zum Undurchsichtig machen Flüssigkristallglas aktiviert wird.

6. Vorrichtung (6) zum Schutz eines Fahrzeugführers (3) eines auf einer Fahrstrecke (2) fahrenden Schienenfahrzeugs (1), wobei die Vorrichtung (6) wenigstens eine Sensoreinrichtung (7) aufweist, die zum Erkennen des vor dem Schienenfahrzeug (1) auf der Fahrstrecke (2) befindlichen Lebewesens (5) ausgebildet ist,
**gekennzeichnet durch**
wenigstens eine Blockadeeinrichtung (8), die zum Blockieren der Sicht des Fahrzeugführers (3) in Richtung wenigstens eines erkannten und auf der Fahrstrecke (2) vor dem Schienenfahrzeug (1) befindlichen Lebewesens (5) ausgebildet ist, wobei die Sensoreinrichtung (7) ausgebildet ist, zu ermitteln, ob es sich bei dem Lebewesen (5) um einen Menschen oder ein Tier handelt, und die Blockadeeinrichtung (8) zum Blockieren der Sicht ausgebildet ist, wenn das Lebewesen (5) ein Mensch ist.

7. Vorrichtung (6) nach Anspruch 6,
**dadurch gekennzeichnet, dass**
die Blockadeeinrichtung (8) wenigstens ein Flüssigkristallglas umfasst und insbesondere als Frontscheibe (4) eines Schienenfahrzeugs (1) ausgebildet ist.

8. Vorrichtung (6) nach Anspruch 6 oder 7,
**dadurch gekennzeichnet, dass**
die Blockadeeinrichtung (8) wenigstens eine aktivierbare und die Sicht blockierende Brille, einen Vorhang oder ein Rollo umfasst.

9. Vorrichtung (6) nach einem der Ansprüche 6 bis 8,
**dadurch gekennzeichnet, dass**
die Sensoreinrichtung (7) wenigstens eine Recheneinrichtung (9) umfasst, die zum Ermitteln einer Wahrscheinlichkeit eines Aufpralls des Lebewesens (5) mit dem Schienenfahrzeug (1) ausgebildet ist, und
die Blockadeeinrichtung (8) zum Blockieren der Sicht ausgebildet ist, wenn die Wahrscheinlichkeit einen vorbestimmten Grenzwert übersteigt.

10. Vorrichtung (6) nach einem der Ansprüche 6 bis 9,
**dadurch gekennzeichnet, dass**
die Sensoreinrichtung (7) zum Ermitteln eines Abstands zwischen dem erkannten Lebewesen (5) und dem Schienenfahrzeug (1) ausgebildet ist und
die Blockadeeinrichtung (8) zum Blockieren der Sicht ausgebildet ist, wenn der Abstand einen vorbestimmten Grenzwert unterschreitet.

11. Vorrichtung (6) nach einem der Ansprüche 6 bis 10,
**dadurch gekennzeichnet, dass**
die Vorrichtung (6) zur Durchführung eines Verfahrens nach einem der oben genannten Ansprüche 1 bis 5 ausgebildet ist.

12. Schienenfahrzeug (1),
**dadurch gekennzeichnet, dass**
das Schienenfahrzeug (1) eine Vorrichtung (6) zum Schutz eines Fahrzeugführers (3) nach einem der oben genannten Ansprüche 6 bis 11 aufweist.

## Claims

1. Method for protecting a vehicle driver (3) of a rail vehicle (1) travelling on a travel route (2),
in which at least one living being (5) situated in front of the rail vehicle (1) on the travel route (2) is identified by a sensor facility (7),
c h a r act e r i sed in that
the vision of the vehicle driver (3) in the direction of the identified living being is blocked by a blocking facility (8), it is ascertained by the sensor facility (7) whether the living being (5) is a human or an animal, and
the vision is only blocked by the blocking facility (8) if the living being is a human.

2. Method according to claim 1,
**characterised in that**
a distance between the identified living being (5) and the rail vehicle (1) is ascertained by the sensor facility (7) and the vision is blocked by the blocking facility (8) if the distance falls below a predetermined limit value.

3. Method according to claim 1 or 2,
**characterised in that**
a probability of the living being (5) colliding with the rail vehicle (1) is ascertained by a computing facility (9) and the vision is blocked by the blocking facility (8) if the probability exceeds a predetermined limit value.

4. Method according to one of the preceding claims,
c h a r act e r i sed in that
in order to block the vision, a front window (4) of the rail vehicle (1) is made at least partially opaque.

5. Method according to claim 4,
**characterised in that**
liquid crystal glass is activated in order to create the opacity.

6. Apparatus (6) for protecting a vehicle driver (3) of a rail vehicle (1) travelling on a travel route (2),
wherein the apparatus (6) has at least one sensor facility (7), which is embodied to identify the living being (5) situated in front of the rail vehicle (1) on the travel route (2),
**characterised by**
at least one blocking facility (8), which is embodied to block the vision of the vehicle driver (3) in the direction of at least one identified living being (5) situated in front of the rail vehicle (1) on the travel route (2), wherein the sensor facility (7) is embodied to ascertain whether the living being (5) is a human or an animal, and the blocking facility (8) is embodied to block the vision if the living being (5) is a human.

7. Apparatus (6) according to claim 6,
**characterised in that**
the blocking facility (8) comprises at least one liquid crystal glass and in particular is embodied as a front window (4) of a rail vehicle (1).

8. Apparatus (6) according to claim 6 or 7,
**characterised in that**
the blocking facility (8) comprises at least one pair of glasses that can be activated and blocks vision, a curtain or a roller blind.

9. Apparatus (6) according to one of claims 6 to 8,
**characterised in that**
the sensor facility (7) comprises at least one computing facility (9), which is embodied to ascertain a probability of the living being (5) colliding with the rail vehicle (1), and
the blocking facility (8) is embodied to block the vision if the probability exceeds a predetermined limit value.

10. Apparatus (6) according to one of claims 6 to 9,
**characterised in that**
the sensor facility (7) is embodied to ascertain a distance between the identified living being (5) and the rail vehicle (1) and
the blocking facility (8) is embodied to block the vision if the distance falls below a predetermined limit value.

11. Apparatus (6) according to one of claims 6 to 10,
**characterised in that**
the apparatus (6) is embodied to perform a method according to one of the aforementioned claims 1 to 5.

12. Rail vehicle (1),
**characterised in that**
the rail vehicle (1) has an apparatus (6) for protecting a vehicle driver (3) according to one of the aforementioned claims 6 to 11.

## Revendications

1. Procédé de protection du conducteur (3) d'un véhicule (1) ferroviaire roulant sur une voie (2) de circulation,
dans lequel on détecte, par un dispositif (7) de détection, au moins un être (5) vivant se trouvant sur la voie (2) de circulation devant le véhicule (1) ferroviaire,
**caractérisé en ce que**
l'on bloque, par un dispositif (8) de blocage, la vue du conducteur (3) du véhicule dans la direction de l'être vivant détecté,
on détermine, par le dispositif (7) de détection, si l'être (5) vivant est un homme ou un animal, et
on ne bloque la vue, par le dispositif (8) de blocage, que si l'être vivant est un homme.

2. Procédé suivant la revendication 1,
**caractérisé en ce que**
l'on détermine, par le dispositif (7) de détection, une distance entre l'être (5) vivant détecté et le véhicule (1) ferroviaire et on bloque la vue, par le dispositif (8) de blocage, si la distance est inférieure à une valeur limite définie à l'avance.

3. Procédé suivant la revendication 1 ou 2,
**caractérisé en ce que**
l'on détermine, par un dispositif (9) informatique, une probabilité d'un choc de l'être (5) vivant avec le véhicule (1) ferroviaire et
on bloque la vue, par le dispositif (8) de blocage, si la probabilité dépasse une valeur limite définie à l'avance.

4. Procédé suivant l'une des revendications mentionnées ci-dessus,
**caractérisé en ce que**,
pour le blocage de la vue, on rend opaque au moins en partie une vitre (4) avant du véhicule (1) ferroviaire.

5. Procédé suivant la revendication 4,
**caractérisé en ce que**,
pour rendre opaque, on active un verre de cristal liquide.

6. Installation (6) de protection du conducteur (3) d'un véhicule (1) ferroviaire roulant sur une voie (2) de circulation, l'installation (6) ayant au moins un dispositif (7) de détection, qui est constitué pour la détection d'un être (5) vivant se trouvant sur la voie (2) de circulation devant le véhicule (1) ferroviaire,
**caractérisée par**
au moins un dispositif (8) de blocage, qui est constitué pour le blocage de la vue du conducteur (3) du véhicule, dans la direction d'au moins un être (5) vivant détecté et se trouvant devant le véhicule (1) ferroviaire sur la voie (2) de circulation, le dispositif (7) de détection étant constitué pour déterminer si l'être (5) vivant est un homme ou un animal et le dispositif (8) de blocage étant constitué pour bloquer la vue, si l'être (5) vivant est un homme.

7. Installation (6) suivant la revendication 6,
**caractérisée en ce que**
le dispositif (8) de blocage comprend au moins un verre à cristal liquide et est constitué notamment en vitre (4) avant d'un véhicule (1) ferroviaire.

8. Installation (6) suivant la revendication 6 ou 7,
**caractérisée en ce que**
le dispositif (8) de blocage comprend un verre, un rideau ou un store activable et bloquant la vue.

9. Installation (6) suivant l'une des revendications 6 à 8,
**caractérisée en ce que**
le dispositif (7) de détection comprend au moins un dispositif (9) informatique, qui est constitué pour la détermination d'une probabilité d'un choc de l'être (5) vivant avec le véhicule (1) ferroviaire, et
le dispositif (8) de blocage est constitué pour bloquer la vue, si la probabilité dépasse une valeur limite définie à l'avance.

10. Installation (6) suivant l'une des revendications 6 à 9,
**caractérisée en ce que**
le dispositif (7) de détection est constitué pour la détection d'une distance entre l'être (5) vivant détecté et le véhicule (1) ferroviaire, et
le dispositif (8) de blocage est constitué pour bloquer la vue, si la distance est inférieure à une valeur limite définie à l'avance.

11. Installation (6) suivant l'une des revendications 6 à 10,
**caractérisée en ce que**
l'installation (6) est constituée pour effectuer un procédé suivant l'une des revendications 1 à 5 mentionnées ci-dessus.

12. Véhicule (1) ferroviaire,
**caractérisé en ce que**
le véhicule (1) ferroviaire a une installation (6) de protection du conducteur (3) du véhicule suivant l'une des revendications 6 à 11 mentionnées ci-dessus.
